# EUROPÄISCHE PATENTSCHRIFT

(11) **EP 2 782 775 B1**
(45) Veröffentlichungstag und Bekanntmachung des Hinweises auf die Patenterteilung: **28.10.2020**
(21) Anmeldenummer: 12766926.5
(22) Anmeldetag: 03.09.2012
(51) Int. Cl.: G01B 7/00, B60L 53/38, B60L 53/65, H04B 5/00

(54) **SYSTEM ZUR POSITIONSBESTIMMUNG VON ZUEINANDER BEWEGLICHEN OBJEKTEN**
SYSTEM FOR DETERMINING THE POSITION OF OBJECTS WHICH CAN MOVE WITH RESPECT TO ONE ANOTHER
SYSTÈME DE DÉTERMINATION DE LA POSITION D'OBJETS MOBILES LES UNS PAR RAPPORT AUX AUTRES

(30) Priorität: 26.09.2011 DE 102011083427
(43) Veröffentlichungstag der Anmeldung: 01.10.2014
(73) Patentinhaber: Siemens Aktiengesellschaft, 80333 München (DE)
(72) Erfinder: SEISENBERGER, Claus, 84181 Neufrannhofen (DE); ROSKOSCH, Richard, 85521 Ottobrunn (DE)
(86) Internationale Anmeldenummer: PCT/EP2012/067129
(87) Internationale Veröffentlichungsnummer: WO 2013/045216

(56) Entgegenhaltungen:
- EP-A1- 2 146 303
- EP-A1- 2 697 910
- EP-A2- 2 555 944
- WO-A2-2011/114208
- DE-A1-102006 026 495
- DE-A1-102006 029 122
- DE-A1-102008 056 610
- DE-A1-102009 006 982
- DE-A1-102009 041 483
- US-A1- 2002 067 250
- US-A1- 2005 246 094
- US-A1- 2008 265 684
- US-A1- 2010 117 596
- US-A1- 2010 328 044
- US-A1- 2011 187 317

## Beschreibung

Die vorliegende Erfindung bezieht sich auf ein System zur Positionsbestimmung von zueinander beweglichen Objekten und insbesondere auf ein System zur Positionsbestimmung, wie es beim induktiven Laden von Elektrofahrzeugen verwendet werden kann.

Beim induktiven Laden von Elektrofahrzeugen findet eine Energieübertragung von einer in einer Bodeneinheit befindlichen Primärspule zu einer an der Unterseite eines Fahrzeugs angebrachten Sekundärspule statt. Dabei ist es erforderlich, dass die Sekundärspule am Fahrzeug möglichst exakt mit der Primärspule der Bodeneinheit in Deckung gebracht bzw. ausgerichtet wird, um einen hohen Wirkungsgrad der Leistungsübertragung zu ermöglichen. Aufgrund der Anbringung der Sekundärspule unter dem Fahrzeugboden benötigt der Fahrer eine technische Unterstützung, um die Position der Spulen zueinander exakt zu bestimmen. Der Ladevorgang sollte hierbei erst freigegeben werden, wenn sich Primär- und Sekundärspule innerhalb eines vorbestimmten Toleranzbereichs übereinander befinden.

Eine Positionsbestimmung mit elektromagnetischer Kopplung gestaltet sich jedoch schwierig, da das Auto als Metallkörper die Feldausbreitung der Primärspule stark beeinflusst und verzerrt. Außerdem ist es wünschenswert, dass nahe benachbarte Ladestationen (in z.B. benachbarten Parkbuchten) gleichzeitig betrieben werden können, ohne sich gegenseitig zu stören, wobei ferner eine eindeutige Zuordnung von Fahrzeug und Ladestation zu gewährleisten ist. Gleichzeitig soll der Fahrer aber ausreichend frühzeitig beim Anfahren der induktiven Ladestation eine Abweichung von der idealen Ladeposition erkennen können.

Herkömmliche Technologien zur Positionsbestimmung im Bereich von Kraftfahrzeugen sind beispielsweise Radar-, Ultraschall- oder optische Abstandsmesssysteme. Diese Systeme weisen im gegebenen Umfeld allerdings alle den Nachteil einer geringen Robustheit gegenüber äußeren Einflüssen auf. Insbesondere werden sie durch eine Verschmutzung, Nässe, Schneeauflage und/oder Sonneneinstrahlung stark negativ beeinflusst.

Aus der WO 2011/114208 A2 ist ein System zur Positionsbestimmung bekannt, bei dem zunächst in einem ersten Schritt eine Positionsbestimmung mit einer Kamera erfolgt und bei ausreichender Annäherung der berührungslosen Stromversorgungs-Sendeeinheit an die berührungslose Empfangseinheit ein Stromversorgungsstatus der Empfangseinheit und insbesondere eine empfangsseitig ausgegebene Spannung erfasst und ausgewertet wird.

Die US 2010/0117596 offenbart ein weiteres herkömmliches System zur Positionsbestimmung für berührungslose Stromversorgungseinheiten, wobei eine Primärspule und eine Sekundärspule zur Optimierung einer Energieübertragung in Deckung gebracht werden. Nach einer Grobjustierung der Energieübertragungsspulen werden eine Vielzahl von Tests durchgeführt, wobei eine Kopplungs- und Energieübertragungseffizienz ermittelt wird und mittels einer Feinjustierung eine optimale Position der Spulen in x-, y- und z-Richtung eingestellt wird. Gemäß der Druckschrift D2 kann hierbei ferner eine Feldstärke erfasst werden, jedoch nur, um die Feldstärken unterhalb der erlaubten Grenzen für Radiostrahlen zu halten.

Aus der US 2011/187317 A1 ist ein schienengeführtes Fahrzeug bekannt, bei dem eine kontaktlose Energieübertragung durchführbar ist. Hierbei werden Magnetspulen mittels Sensoren übereinander ausgerichtet, um eine optimale Energieübertragung zu realisieren.

Die US 2010/328044 A1 offenbart ein induktives Stromversorgungs-Pad mit einer Vielzahl von Übertragungsspulen, die jeweils einen Detektor zum Erfassen einer Empfangseinheit aufweisen. Hierbei wird eine jeweilige Übertragungsspule aktiviert, sobald eine Empfangseinheit in die Nähe kommt und vom jeweiligen Detektor erfasst wird.

Aus der EP 2 146 303 A1 ist eine Vorrichtung und ein Verfahren zum Identifizieren und Überwachen von Reifen bekannt, wobei RFID-Transponder an den Reifen eines Kraftfahrzeuges befestigt sind und ausgewertet werden.

Weiterhin ist aus der US 2008/0265684 A1 ein berührungsloses Energieübertragungssystem bekannt, bei dem eine optimale Positionierung der gegenüberliegenden Spulen mittels "beamsearching" durchgeführt wird, welche vom Gesamt-Kopplungskoeffizienten bestimmt wird. Insbesondere wird hierbei die Position in Abhängigkeit von der Energieübertragungsfrequenz ermittelt.

Die DE 10 2009 006982 A1 zeigt ein weiteres herkömmliches Ladesystem für Hybrid- und Elektrofahrzeuge, wobei eine Robotereinheit eine drahtgebundene Schnittstelle (Ladekabel) auf der Basis einer ermittelten Position automatisch an das Fahrzeug anlegt. Hierbei können insbesondere RFID-Chips zum Einsatz kommen.

Aus der DE 10 2009 041483 A1 ist ein Lagegebersystem zur Positionsbestimmung eines Primärteils in Bezug zu einem Sekundärteil eines Linearmotors bekannt, wobei ein RFID Lesegerät zumindest einen RFID-Tag erfasst.

Die DE 10 2006 029122 A1 offenbart ein weiteres herkömmliches System zur Positionsbestimmung bei medizinischen Instrumenten, wobei eine Sendeeinheit eine elektromagnetisches Signal erzeugt und ein Sensor ein der elektromagnetischen Feldstärke entsprechendes Lokalisierungssignal erzeugt. Hierbei werden insbesondere RFID-Tags als Sensoren vorgeschlagen.

Weiterhin offenbart die DE 10 2008 056610 A1 einen automatischen Elektro- Anschluss für Kraftfahrzeuge, wobei die exakte Position der Anschlussstelle durch RFID-Signale ermittelt wird.

Die Druckschrift US 2005/246094 A1 zeigt ein RFID-System zur Positionsbestimmung von beweglichen Objekten innerhalb eines begrenzten Raumes, wobei die RFID-Tags an vorgegebenen Positionen innerhalb des begrenzten Raumes angeordnet sind. Abschließend ist auch aus der DE 10 2006 026495 A1 nur eine Vorrichtung und ein Verfahren zur Positionsbestimmung eines Transponders in einem RFID-System bekannt, wobei ein Funksystem ein magnetisches Wechselfeld erzeugt und eine Empfangseinheit ein Zuordnungssignal ermittelt, welches ein Maß für eine induktive Kopplung darstellt.

Die Druckschrift US 2002/0067250 A1 offenbart auch eine Vorrichtung und ein Verfahren zur Positionsbestimmung der relativen Position zwischen zwei Objekten.

Die älteren, nachveröffentlichten, WO 2011/127455 (D14) und WO 2012/142040 offenbaren ein System bei dem die Positionierung von zwei Objekten auf Grundlage eines elektromagnetischen Felds erfolgt, wobei die Sende-/Empfangsantennen eine als so genanntes Backing, also eine Seite abschirmende, Farritplatte zur Feldverstärkung aufweisen.

Der Erfindung liegt daher die Aufgabe zugrunde, ein System zur Positionsbestimmung von zueinander beweglichen Objekten zu schaffen, welches bei hoher Robustheit eine hohe Genauigkeit aufweist.

Erfindungsgemäß wird diese Aufgabe durch die Systeme gemäß Patentanspruch 1 und 8 gelöst.

Auf diese Weise können die für die Positionsbestimmung verwendeten elektrischen und/oder magnetischen Felder konzentriert werden, so dass die Feldausbreitung nahezu unbeeinflusst und unverzerrt ist, wodurch eine sehr genaue Positionsbestimmung ermöglicht wird.

Vorzugsweise weist die Feldgeneratoreinheit zumindest eine Sendespule auf, welche gleichzeitig auch ein Ladefeld zum induktiven Laden erzeugt. Dadurch kann insbesondere die induktive Ladestation äußerst einfach und kostengünstig realisiert werden.

Ferner kann die Feldmesseinheit beispielsweise vier oder fünf Empfangsspulen aufweisen, wodurch sich eine Positioniergenauigkeit weiter erhöht.

Vorzugsweise wird das Positionierfeld ein elektromagnetisches Wechselfeld mit einer Frequenz zwischen 10 kHz und 20 MHz aufweisen. Erfindungsgemäß weist der Feldkonzentrator einen ferromagnetischen Stoff mit insbesondere einer Permeabilitätszahl µ_{R}>100 auf, wodurch sich eine besonders hohe Konzentrierung der Feldlinien im Feldkonzentrator realisieren lässt und eine Beeinflussung durch beispielsweise das Metall der Fahrzeugkarosserie stark verringert ist.

Vorzugsweise ist der Feldkonzentrator flächig und insbesondere als rechteckige Ferritmatte ausgebildet, wodurch sich das elektrische und/oder magnetische Feld insbesondere hinsichtlich seiner Reichweite sehr gut begrenzen lässt. Die Realisierung einer Vielzahl von nahe benachbarten Ladestationen wird dadurch stark vereinfacht.

Vorzugsweise wird die Feldgeneratoreinheit sowie die Feldmesseinheit durch ein RFID-Lesegerät und die Feldrückstreueinheit durch zumindest eine RFID-Marke realisiert, wodurch man eine hoch genaue Positionsbestimmung auch mit einem System erhält, welches nur auf einer Seite aktive Elektronik aufweist. Ferner kann dadurch eine eindeutige Authentifizierung automatisch erfolgen, was beispielsweise für das induktive Laden von Bedeutung ist.

In den weiteren Unteransprüchen sind weitere vorteilhafte Ausgestaltungen der Erfindung gekennzeichnet.

Die Erfindung wird nachstehend und anhand von Ausführungsbeispielen unter Bezugnahme auf die Zeichnung näher beschrieben.

Es zeigen:
Figur 1 eine vereinfachte Seitenansicht eines Systems zur Positionsbestimmung gemäß einem ersten Ausführungsbeispiel;
Figuren 2A und 2B vereinfachte Seitenansichten zur Veranschaulichung eines Feldlinienverlaufs mit und ohne erfindungsgemäßen Feldkonzentratoren;
Figuren 3A bis 3C vereinfachte Draufsichten einer Feldgeneratoreinheit gemäß weiteren Ausführungsbeispielen;
Figur 4 eine vereinfachte Darstellung eines Feldstärkenverlaufs in Abhängigkeit von unterschiedlich dimensionierten Sendespulen;
Figuren 5A und 5B vereinfachte Draufsichten einer Feldmesseinheit gemäß weiteren Ausführungsbeispielen der Erfindung;
Figur 6 eine vereinfachte perspektivische Ansicht eines Systems zur Positionsbestimmung gemäß einem alternativen Ausführungsbeispiel.

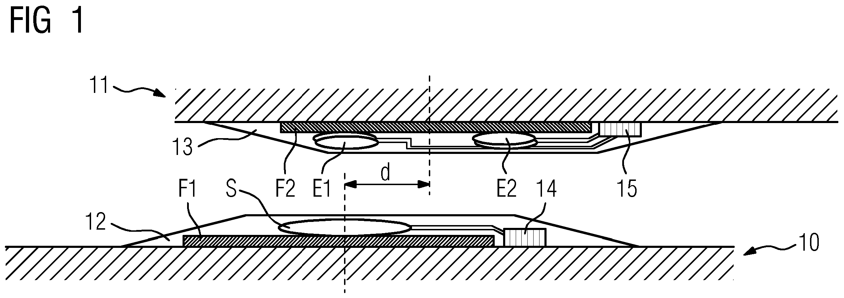

Figur 1 zeigt eine vereinfachte Seitenansicht eines Systems zur Positionsbestimmung von zueinander beweglichen Objekten wie sie insbesondere beim induktiven Laden von Elektrofahrzeugen zum Einsatz kommen kann. Auf einem Untergrund, wie ihn beispielsweise eine geteerte Parkbucht oder eine sonstige Auflagefläche darstellen kann, befindet sich beispielsweise eine Feldgeneratoreinheit 12 zum Erzeugen eines elektrischen und/oder magnetischen Positionierfeldes. Die Feldgeneratoreinheit 12 ist dem Untergrund 10 fest zugeordnet, welcher beispielsweise ein erstes Objekt darstellen soll.

Die Feldgeneratoreinheit 12 kann beispielsweise eine Sendespule S sowie eine zugehörige Sendeelektronik 14 aufweisen. Zur Begrenzung der Reichweite des elektrischen und/oder magnetischen Positionierfeldes kann sich zwischen der Sendespule S und dem ersten Objekt bzw. Untergrund 10 ein erster Feldkonzentrator F1 befinden. Beispielsweise kann der erste Feldkonzentrator F1 flächig ausgebildet und insbesondere eine Matte mit ferromagnetischem Material aufweisen, wie z.B. eine Ferritmatte.

Zur Vermeidung von mechanischen Beschädigungen kann die Feldgeneratoreinheit 12 durch ein mesaförmiges Gehäuse geschützt sein, welches sowohl die Sendespule S als auch den ersten Feldkonzentrator F1 sowie die Sendeelektronik 14 vor Schädigungen schützt und die von der Sendespule S erzeugten Feldlinien im Wesentlich unbeeinflusst. Hierfür eignen sich insbesondere hochfeste Kunststoffe.

Gemäß Figur 1 ist ferner der Unterboden 11 von beispielsweise einem Elektrofahrzeug als zweites Objekt dargestellt, wobei zwischen dem ersten Objekt 10 und dem zweiten Objekt 11 ein Positionsversatz d dargestellt ist, der die optimale Ausrichtung von beispielsweise einer Ladespule (Primärspule) in der Bodeneinheit 10 gegenüber einer nicht dargestellten Empfangsspule (Sekundärspule) am Unterboden 11 des Elektrofahrzeugs darstellt. Um einen möglichst hohen Wirkungsgrad der Leistungsübertragung zu ermöglichen, ist es nämlich erforderlich, dass die Sekundärspule am Elektrofahrzeug möglichst exakt mit der Primärspule in Deckung gebracht wird, d.h. der Positionsversatz d gleich Null ist.

Da in Figur 1 lediglich ein Positionsversatz d in x-Richtung dargestellt ist, gilt Entsprechendes selbstverständlich auch für einen nicht dargestellten Positionsversatz in y-Richtung. Grundsätzlich könnte auch ein Positionsversatz in z-Richtung mit dem vorliegenden System bestimmt werden.

Gemäß Figur 1 befindet sich am Unterboden 11 des Elektrofahrzeugs eine Feldmesseinheit 13 zum Messen des von der Feldgeneratoreinheit 12 erzeugten elektrischen und/oder magnetischen Positionierfeldes. Die Feldmesseinheit 13 ist dem zweiten Objekt 11 zugeordnet bzw. fest mit dem Boden des Elektrofahrzeugs verbunden und ermöglicht die Ermittlung einer positionsabhängigen Feldinformation in Abhängigkeit vom Positionsversatz d. Genauer gesagt wird ein von der Feldgeneratoreinheit 12 erzeugtes Signal auf die Sendespule S geführt, wobei in der Empfangseinheit bzw. Feldmesseinheit 13 beispielsweise das induktive Wechselfeld von den Empfangsspulen E1 und E2 aufgenommen und an die Empfangselektronik 15 weitergeleitet wird. Aus der gemessenen Feldstärke und Feldrichtung des zu einem Positionierversatzes d erfassten Positionierfeldes kann anschließend die relative Position der beiden Objekte 10 und 11 bzw. der Feldgeneratoreinheit 12 zur Feldmesseinheit 13 ermittelt werden.

Wiederum kann auch empfängerseitig ein zweiter Feldkonzentrator F2 zwischen der zumindest einen Empfangsspule E1 und E2 und dem zweiten Objekt 11 bzw. dem Fahrzeugunterboden angeordnet sein, wodurch sich die Feldlinien konzentrieren lassen, eine Reichweitenbegrenzung ermöglicht wird und insbesondere eine Beeinflussung und Verzerrung durch möglicherweise vorhandene Metallkörper an der Unterseite des Elektrofahrzeugs zuverlässig verhindert werden kann.

Insbesondere bei der Verwendung von zwei Feldkonzentratoren F1 und F2 kann der Feldlinienverlauf derart konzentriert und kanalisiert werden, dass eine außerordentlich genaue Positionsbestimmung ermöglicht wird, auch wenn nahe benachbarte Ladestationen bzw. Feldgenerator- und Feldmesseinheiten in wenigen Metern Abstand vorhanden sind, wie dies üblicherweise in Parkbuchten von Parkhäusern bzw. Tiefgaragen der Fall ist.

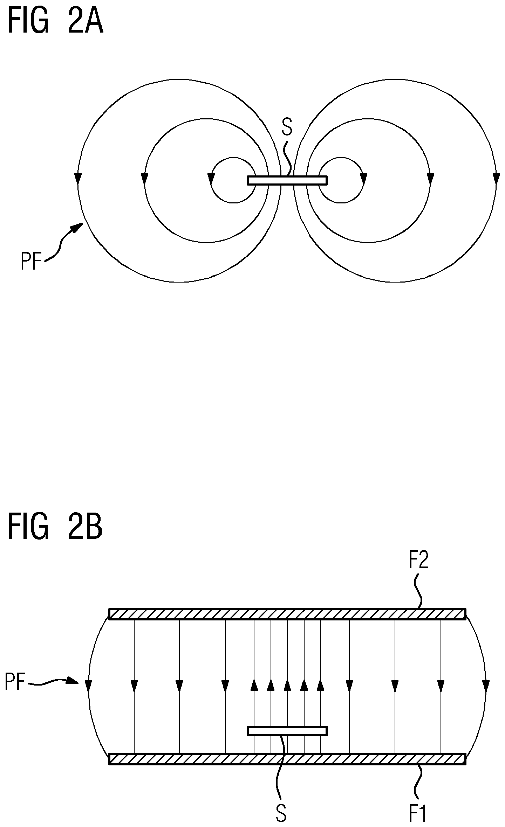

Figuren 2A und 2B zeigen vereinfachte Seitenansichten eines Feldlinienverlaufs zur Veranschaulichung der Wirkungsweise der erfindungsgemäßen Feldkonzentratoren F1 und F2, wobei gleiche Elemente mit gleichen Bezugszeichen bezeichnet werden und zur Vermeidung von Wiederholungen auf eine wiederholte Beschreibung verzichtet wird.

Die Figur 2A zeigt hierbei eine Sendespule S wie sie üblicherweise in einer Feldgeneratoreinheit zum Erzeugen eines elektrisch und/oder magnetischen Positionier-Feldes PF erzeugt wird. Gemäß Figur 2A ergeben sich hierbei im Wesentlichen kreisförmige Feldlinien, welche insbesondere bei Vorliegen von Metallkörpern im Boden oder im Elektrofahrzeug stark beeinflusst bzw. verzerrt werden (nicht dargestellt).

Gemäß Figur 2B wird demgegenüber durch die Feldkonzentratoren F1 und F2 ein sehr gleichmäßiger und nahezu parallel laufender Feldlinienverlauf des elektrischen und/oder magnetischen Feldes bewirkt, was eine sehr einfache Auswertung von Feldstärken sowie Feldrichtungen ermöglicht, um dadurch eine Position der beiden zueinander beweglichen Objekte hochgenau zu bestimmen.

Wieder zurückkehrend zu Figur 1 kann somit der weitaus größte Teil des beispielsweise elektromagnetischen Positionierfeldes PF in diesen Feldkonzentratoren F1 und F2 geführt werden. Die Feldstärke nimmt außerhalb dieser Feldkonzentratoren F1 und F2 und auch dahinter sehr stark ab, so dass die Reichweite des elektrischen und/oder magnetischen Feldes im Wesentlichen auf den Bereich der flächenförmig ausgebildeten Feldkonzentratoren begrenzt ist. Damit wird eine Beeinflussung durch benachbarte gleichartige Systeme ausgeschlossen, wie sie beispielsweise in Parkhäusern und Tiefgaragen vorliegen könnten. Darüber hinaus beeinflusst auch beispielsweise das Metall der Fahrzeugkarosserie oder andere Metallteile im Boden nicht mehr die Feldverteilung in nachteiliger Weise, wodurch eine Positioniergenauigkeit erhöht ist.

Beispielsweise kann für das elektrische und/oder magnetische Positionierfeld ein elektromagnetisches Wechselfeld verwendet werden. Die Sendefrequenz wird beispielsweise so gewählt, dass die Feldkonzentratoren F1 und F2 aktiv sind. Beispielsweise kann eine rechteckförmige Ferritmatte als Feldkonzentrator sende- und empfangsseitig verwendet werden, wobei sich die Frequenz des Wechselfeldes beispielsweise zwischen 10 kHz und 20 MHz befindet, um die Ferrite in den Ferritmatten bzw. Feldkonzentratoren F1 und F2 zu aktivieren.

Beispielsweise kann für Feldkonzentratoren mit einem ferromagnetischen Stoff, der eine Permeabilitätszahl von größer 100 aufweist, eine Frequenz von 10 kHz bis 20 MHz verwendet werden. Als Frequenzen für das elektromagnetische Wechselfeld bzw. Positionierfeld PF werden insbesondere 125 kHz, 6,78 MHz und 13,56 MHz verwendet. Obwohl für die Feldkonzentratoren F1 und F2 vorzugsweise eine Ferritmatte verwendet wird, können auch andere alternative Stoffe verwendet werden, welche eine Permeabilitätszahl von µ_{R}>100 aufweisen. Ferner kann der Feldkonzentrator F1 und F2 z.B. ein Material mit hoher Dielektrizitätskonstante, insbesondere εᵣ>2 aufweisen.

Der flächig ausgebildete Feldkonzentrator F1 und F2 weist beispielsweise eine rechteckige Form auf, welche größer als die ihm zugeordneten Feldgenerator- und Feldmesseinheiten ist. Die Form der Feldkonzentratoren kann jedoch auch kreisförmig oder oval sein oder andere geeignete Formen aufweisen, um den Feldlinienverlauf in geeigneter Weise zu konzentrieren, zu begrenzen oder zu vereinheitlichen.

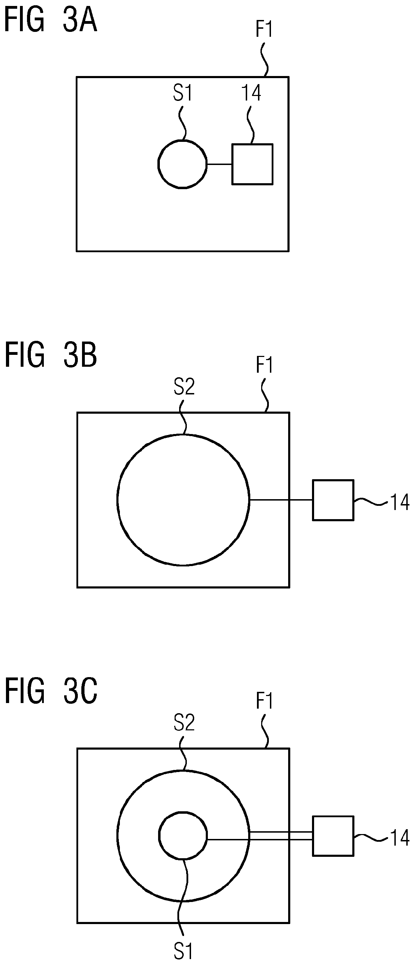

Die Figuren 3A bis 3C zeigen vereinfachte Draufsichten einer Feldgeneratoreinheit mit zugehörigem Feldkonzentrator, wobei gleiche Bezugszeichen gleiche oder entsprechende Elemente bezeichnen und auf eine wiederholte Beschreibung nachfolgend verzichtet wird. Gemäß Figur 3A kann die Feldgeneratoreinheit nur eine Sendespule S1 aufweisen, die gemeinsam mit der Sendeelektronik 14 durch einen Feldkonzentrator F1 zum Boden hin abgedeckt wird.

Gemäß Figur 3A kann hierbei die Sendespule S1 für das Positionierfeld PF auch ein nicht dargestelltes Lade-Feld erzeugen, welches zur Realisierung eines induktiven Ladens benötigt wird.

Gemäß Figur 3B kann in der Feldgeneratoreinheit auch eine relativ große Sendespule S2 angeordnet sein, welche die Abmessungen des Felkonzentrators F1 fast vollständig erreicht, wobei die Sendeelektronik 14 sich außerhalb des Abdeckungsbereichs des zugeordneten Feldkonzentrators F1 befindet.

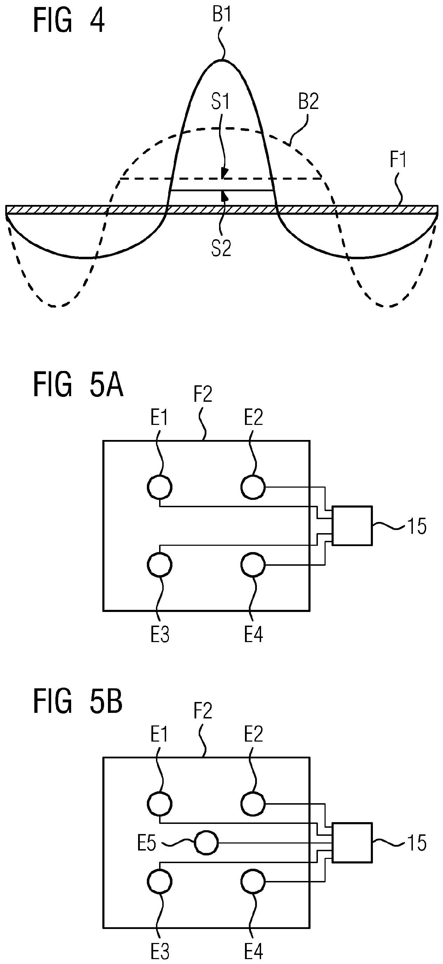

Welches der in den Figuren 3A und 3B dargestellten Ausführungsbeispiele zum Einsatz kommt, hängt im Wesentlichen von jeweiligen Randbedingungen ab. Hierbei gelten jedoch die in Figur 4 grundsätzlichen Feldstärkeverläufe.

Figur 4 zeigt eine Seitenansicht eines vereinfachten Feldstärkeverlaufs B1 für eine gegenüber dem Feldkonzentrator F1 relativ kleine Sendespule S1 und eines vereinfachten Feldstärkeverlaufs B2 für eine gegenüber der Sendespule S1 vergrößerte Sendespule S2. Gemäß Figur 4 erhält man für eine Sendespule S1 mit relativ zum Feldkonzentrator F1 kleinen Abmessungen einen steilen Feldstärkeverlauf mit hohen Feldstärkewerten, während man für die Sendespule S2 mit den gegenüber der Sendespule S1 vergrößerten Abmessungen einen abgeflachten Feldstärkeverlauf B2 mit reduzierten Feldstärkewerten erhält(bei ansonsten gleicher Ansteuerung durch die Sendeelektronik 14.

Da sich der Feldstärkeverlauf räumlich entsprechend fortsetzt, muss man sich die Seitenansicht gemäß Figur 4 drehsymmetrisch vorstellen, um den gesamten Feldstärkeverlauf im dreidimensionalen Raum zu erkennen (Form eines Mexikanerhuts). Unter bestimmten Bedingungen kann eine abgeflachte Form des Feldstärkeverlaufs wie er durch die Kurve gemäß B2 dargestellt ist bevorzugt sein, da sich hierdurch eine Positioniergenauigkeit erhöhen lässt. Die Positionsbestimmung erfolgt hierbei durch beispielsweise einen Vergleich des bzw. der ermittelten Feldstärkewerte(s) mit einem Soll-Feldstärkeverlauf.

Wieder zurückkehrend zur Figur 3C können in der Feldgeneratoreinheit 12 auch zwei Sendespulen S1 und S2 beispielsweise konzentrisch angeordnet und mit einer Sendeelektronik 14 verbunden sein. Hierbei wird sich üblicherweise der Feldstärkenverlauf wieder aufsteilen, wobei jedoch eine Spule S2 insbesondere als Ladespule (Primärspule) zum Erzeugen eines Lade-feldes und eine Spule S1 als Spule zum Erzeugen des Positionier-Feldes PF verwendet werden kann.

Obwohl in den Figuren 3A bis 3C eine oder zwei Sendespulen dargestellt sind, können grundsätzlich auch noch weitere Sendespulen angeordnet sein, welche zum Erzeugen eines Positionier-Feldes PF oder Lade-Feldes geeignet sind. Ferner kann der Feldkonzentrator F1 abweichend von der in den Figuren 3A bis 3C dargestellten Form auch eine kreisrunde Form oder eine ovale Form oder eine an die Spulen und die Sendeelektronik angepasste Form aufweisen, wobei er jedoch grundsätzlich das elektrische und/oder magnetische Feld begrenzen sollte.

Die Figuren 5A und 5B zeigen vereinfachte Draufsichten von Ausführungsbeispielen für eine Feldmesseinheit 13, wobei gleiche Bezugszeichen gleiche oder entsprechende Elemente bezeichnen wie in den vorstehend beschriebenen Figuren und auf eine wiederholte Beschreibung nachfolgend verzichtet wird.

Gemäß Figur 5A kann in einer Feldmesseinheit 13 eine Empfangselektronik 15 außerhalb des zugeordneten Feldkonzentrators F2 zugeordnet sein, der im Wesentlichen vier Empfangsspulen E1 bis E4 abdeckt und wiederum eine rechteckförmige Ferritmatte darstellen kann. Durch die Verwendung von vier Empfangsspulen kann gegenüber der Verwendung von nur einer Empfangsspule eine Positioniergenauigkeit sowie eine Geschwindigkeit bei der Positionsfindung wesentlich erhöht werden. Die Empfangsspulen E1 bis E4 können hierbei zu einer nicht dargestellten Sekundärspule äquidistant angeordnet sein und im Wesentlichen der Form des zugeordneten Feldkonzentrators F2 entsprechen.

Gemäß Figur 5B kann die Feldmesseinheit aber auch fünf Empfangsspulen E1 bis E5 aufweisen, wobei eine weitere fünfte Empfangsspule E5 im Mittelpunkt der vier quadratisch angeordneten Empfangsspulen E1 bis E4 liegt. Üblicherweise wird ein Nullpunkt bei der Positionsbestimmung, d.h. ein Positionsversatz von d=0 mit der fünften Empfangsspule E5 zentriert ausgebildet. Die fünfte Empfangsspule E5 kann beispielsweise mit der nicht dargestellten Sekundärspule ausgerichtet sein oder dieser entsprechen, d.h. diese Spule wird sowohl zur Positionsbestimmung als auch zur Energieübertragung verwendet. Wiederum kann sich dadurch sowohl die Positionsgenauigkeit als auch die Geschwindigkeit bei der Positionsbestimmung wesentlich erhöhen.

Vorzugsweise wird als positionsabhängige Feldinformation eine Feldstärke des elektrischen und/oder magnetischen Feldes ermittelt und ausgewertet. Hierbei kann in Abhängigkeit von der ermittelten Feldstärke und in Kenntnis des Soll-Feldstärkeverlaufs, wie er beispielsweise in Figur 4 dargestellt ist, relativ einfach eine Positionsbestimmung durch eine nicht dargestellte Positionsbestimmungseinheit durchgeführt werden. Die Positionsbestimmungseinheit kann hierbei sowohl auf der Seite des Elektrofahrzeugs als auch auf der Seite der Bodeneinheit angeordnet sein.

Neben einem normalen Wechselfeld können auch Wechselfelder im Zeit- und/oder Frequenzmultiplexverfahren zum Erzeugen eines entsprechenden Positionier-Feldes PF verwendet werden. Obwohl üblicherweise eine Vielzahl von Empfangsspulen E1 bis E5 in der Feldmesseinheit verwendet werden können, besteht grundsätzlich auch die Möglichkeit, dass lediglich nur eine Empfangsspule verwendet wird, welche in Abhängigkeit vom zeitlichen Verlauf bzw. einem zugehörigen Wegstreckensignal eine Vielzahl von positionsabhängigen Feldinformationen erzeugt, welche zur Positionsbestimmung ausgewertet werden können.

In gleicher Weise kann auch eine Wegeinkrementierinformation unter Auswertung eines Abstands und eines zugehörigen Winkels gemeinsam mit einer Feldinformation dazu verwendet werden, um einen örtlichen Verlauf innerhalb des Feldstärkeverlaufs zu ermitteln und damit eine Positionsbestimmung zu ermöglichen. Demzufolge lässt sich auf verschiedene Weise, d.h. mit einer oder mehreren Empfangsspulen, nicht nur der Abstand bzw. der Positionierversatz d sondern auch eine Bewegungsrichtung innerhalb des Feldstärkeverlaufs bestimmen, wodurch sich eine sehr genaue und insbesondere schnelle Positionsbestimmung realisieren lässt.

Der Einsatz von mehreren Sendespulen ist insbesondere denkbar, wenn z.B. ein größerer Auswertebereich abgedeckt werden soll. Hierbei könnte die Vielzahl von Sendespulen z.B. über leicht unterschiedliche Sendefrequenzen unterscheidbar realisiert werden, wobei beispielsweise auf der Empfangsseite entsprechende Filter vorzusehen wären.

Die vorliegende Erfindung könnte auch dazu benutzt werden, um zusätzlich zur Positionsbestimmung noch weitere Daten zu übertragen. Hierbei wären theoretisch alle in der Praxis verwendeten Modulationsverfahren denkbar wie z.B. ASK-, PSK-, FM- oder OFDM-Verfahren.

Weiterhin könnte das Ergebnis der Positionsbestimmung durch die Positionsbestimmungseinheit über weitere im System befindliche Funkschnittstellen weitergegeben werden. Wenn demzufolge z.B. die Positionsinformation in der Bodeneinheit benötigt wird, so könnten entsprechende Daten zur am Boden befindlichen Einheit übertragen werden. Dies wäre insbesondere der Fall, wenn beispielsweise über eine Anzeigentafel der Parkbucht eine Parkeinweisung erfolgt.

Weiterhin können auch Daten zwischen Feldgeneratoreinheit und Feldmesseinheit übertragen werden, wie sie insbesondere zur Realisierung eines induktiven Ladens von Fahrzeugen benötigt werden.

Obwohl die beschriebenen Sendespulen und Empfangsspulen primär der Realisierung eines Positionier-Feldes PF dienen, können diese Spulen auch für die Leistungsübertragung beim induktiven Laden genutzt werden, wobei die Feldkonzentratoren wiederum auch beim Laden die Feldführung und somit Leistungsübertragung verbessern.

Gemäß einem weiteren nicht dargestellten Ausführungsbeispiel kann die Feldmesseinheit 13 die zum Betrieb benötigte Energie auch über die Feldenergie aus der Sendespule S beziehen. Es wäre hiermit nicht mehr notwendig, Leitungen zur Stromversorgung an die Empfangselektronik 15 zu legen.

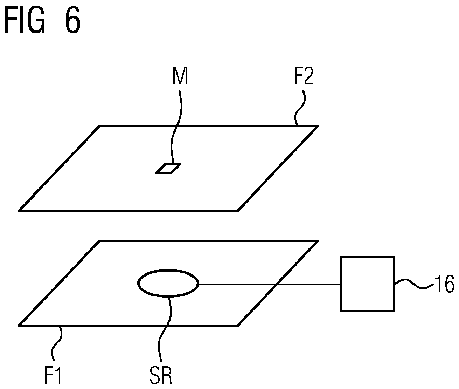

Figur 6 zeigt ein alternatives Ausführungsbeispiel, wobei gleiche Bezugszeichen gleiche oder entsprechende Elemente bezeichnen, weshalb nachfolgend auf eine wiederholte Beschreibung verzichtet wird.

Gemäß diesem alternativen Ausführungsbeispiel kann die Feldgeneratoreinheit auch in Form einer RFID-Basisstation (Radio Frequency IDentification) ausgeführt sein, während sich auf der gegenüberliegenden Seite eine oder mehrere RFID-Transponder oder RFID-Marken M befinden. Derartige RFID-Transponder bzw. RFID-Marken stellen standardisierte Produkte vor, welche beispielsweise mit Arbeitsfrequenzen von 125 kHz oder 13,56 MHz betrieben werden, weshalb auf ihren Aufbau und ihre Funktionsweise nachfolgend nicht näher eingegangen wird.

Im alternativen Ausführungsbeispiel mit RFID-Erkennung befindet sich auf einer Seite ein RFID-Lesegerät 16 mit einer Sende-/Empfangsspule SR und auf der gegenüberliegenden Seite der RFID-Transponder bzw. die RFID-Marke M. Das Lesegerät 16 erzeugt über die Sende-/Empfangsspule SR ein elektromagnetisches Feld, das von der RFID-Marke M empfangen wird. Diese bezieht daraus seine Energie und kann durch modulierte Rückstreuung Daten zum Lesegerät 16 senden. Im Lesegerät 16 kann anschließend wiederum beispielsweise die Feldstärke des Datensignals der RFID-Marke M bestimmt werden. Damit kann also am Ort der RFID-Marke M die Feldstärke des vom Lesegerät 16 bzw. dessen Sende-/Empfangsspule SR erzeugten Feldes bestimmt werden. Die weitere Auswertung des Feldstärkesignals erfolgt analog zu den vorhergehend beschriebenen Ausführungsbeispielen mit diskreten Empfangssystemen bzw. getrennter Feldmesseinheit, weshalb auf eine wiederholte Beschreibung nachfolgend verzichtet wird.

Auch im vorliegenden alternativen Ausführungsbeispiel kann durch Verwendung von mehreren RFID-Marken die Feldstärke an verschiedenen Punkten bestimmt und rückgestreut werden, wodurch sich zum einen eine Genauigkeit der Positionsbestimmung erhöht als auch die Geschwindigkeit für die Positionsbestimmung verbessert wird.

Analog zu den Figuren 5A und 5B können demzufolge die RFID-Marken vierfach oder fünffach unter dem Feldkonzentrator F2 vorliegen. Die Wirkungsweise der Feldkonzentratoren F1 und F2 ist hierbei die gleiche wie in den vorhergehend beschriebenen Ausführungsbeispielen, weshalb auf eine wiederholte Beschreibung nachfolgend verzichtet wird.

Der Vorteil dieses alternativen Ausführungsbeispiels liegt insbesondere darin, dass nur auf einer Seite aktive und komplexe Elektronik und somit eine Stromversorgung benötigt wird, während auf der gegenüberliegenden Seite standardisierte Bauelemente verwendet werden können. Ein weiterer Vorteil liegt darin begründet, dass mit den RFID-Marken M gleichzeitig eine eindeutige Authentifizierung bzw. Identifizierung der Gegenseite möglich ist, was für das induktive Laden von Elektrofahrzeugen fast immer benötigt wird.

Das vorstehend beschriebene System wurde insbesondere anhand einer Ladestation zum induktiven Laden von Elektrofahrzeugen beschrieben. Sie ist jedoch nicht darauf beschränkt und umfasst grundsätzlich auch andere Einsatzzwecke, bei denen die Position zweier Einheiten zueinander bestimmt werden muss und eine Beeinflussung insbesondere durch Metall in der Umgebung vermieden werden soll. Ferner ist die vorliegende Erfindung für alle Anwendungen vorteilhaft, bei denen durch eine Reichweitenbegrenzung die Störung durch benachbarte weitere Systeme vermieden werden soll.

Die Erfindung wurde vorstehend anhand einer Ladestation beschrieben, bei der die Feldgeneratoreinheit bzw. Sendeeinheit im Boden und die Feldmesseinheit am beweglichen Objekt angeordnet ist. Grundsätzlich können jedoch auch die Feldgeneratoreinheit am Fahrzeug bzw. beweglichen Objekt und die Feldmesseinheit am Boden angeordnet sein. Darüber hinaus kann das System zur Positionsbestimmung auch für zwei bewegliche Objekte verwendet werden, wobei wiederum die Feldgeneratoreinheit und die Feldmesseinheit in beliebiger Weise den Objekten zugeordnet sein kann. In der vorliegenden Beschreibung wurden insbesondere Frequenzbereiche angegeben, bei denen vorwiegend von einer elektromagnetischen Kopplung ausgegangen wird. Die Erfindung ist jedoch nicht darauf beschränkt und umfasst in gleicher Weise auch rein elektrische oder magnetische Kopplungen.

### Bezugszeichenliste

- 10: erstes Objekt
- 11: zweites Objekt
- 12: Feldgeneratoreinheit
- 13: Feldmesseinheit
- 14: Sendeelektronik
- 15: Empfangselektronik
- S, S1, S2: Sendespulen
- E1 bis E5: Empfangsspulen
- F1, F2: Feldkonzentrator
- d: Positionsversatz
- PF: Positionierfeld
- B1, B2: Feldstärkeverlauf für Spule 1, Spule 2
- SR: Sende-/Empfangsspule
- M: RFID-Marke
- 16: RFID-Lesegerät

## Patentansprüche

1. System zur Positionsbestimmung von zueinander beweglichen Objekten (10, 11) mit:
einer Feldgeneratoreinheit (12) zum Erzeugen eines elektrischen und/oder magnetischen Positionierfeldes, die einem ersten Objekt (10) zugeordnet ist;
einer Feldmesseinheit (13) zum Messen des elektrischen und/oder magnetischen Positionierfeldes, die einem zweiten Objekt (11) zugeordnet ist und eine positionsabhängige Feldinformation ermittelt, wobei die Feldinformation eine Feldstärke und Feldrichtung aufweist; und
einer Positionsbestimmungseinheit zum Bestimmen einer relativen Position der Objekte (10, 11) in Abhängigkeit von der Feldstärke und Feldrichtung
wobei ein erster Feldkonzentrator (F1) zwischen dem ersten Objekt (10) und der Feldgeneratoreinheit (12) und/oder ein zweiter Feldkonzentrator (F2) zwischen dem zweiten Objekt (11) und der Feldmesseinheit (13) angeordnet ist und wobei der Feldkonzentrator (F1, F2) einen ferromagnetischen Stoff mit einer Permeabilitätszahl *µ*_{R}>100, aufweist.

2. System nach Patentanspruch 1, wobei die Feldgeneratoreinheit (12) das elektrische und/oder magnetische Positionierfeld mit zumindest einer Sendespule (S) erzeugt.

3. System nach Patentanspruch 2, wobei die Sendespule (S) ferner ein Ladefeld zum induktiven Laden erzeugt.

4. System nach einem der Patentansprüche 1 bis 3, wobei das Positionierfeld (PF) ein elektromagnetisches Wechselfeld mit einer Frequenz zwischen 10 kHz und 20 MHz aufweist.

5. System nach einem der Patentansprüche 1 bis 4, wobei die Feldmesseinheit (13) zumindest eine Empfangsspule (E1), insbesondere vier oder fünf Empfangsspulen, aufweist.

6. System nach einem der Patentansprüche 1 bis 5, wobei der Feldkonzentrator (F1, F2) flächig ausgebildet ist.

7. System nach einem der Patentansprüche 1 bis 6, wobei eine Energierückgewinnungseinheit aus dem Positionierfeld eine elektrische Energie rückgewinnt und damit die Feldmesseinheit (13) versorgt.

8. System zur Positionsbestimmung von zueinander beweglichen Objekten mit:
einer Feldgeneratoreinheit (SR) zum Erzeugen eines elektrischen und/oder magnetischen Feldes, das einem ersten Objekt zugeordnet ist;
einer Feldrückstreueinheit (M) zum Rückstreuen des erzeugten Feldes, die einem zweiten Objekt zugeordnet ist;
einer Feldmesseinheit (SR, 16) zum Messen des rückgestreuten Feldes und Ermitteln einer positionsabhängigen Feldinformation, wobei die Feldinformation eine Feldstärke und Feldrichtung aufweist; und
einer Positionsbestimmungseinheit, die eine relative Position der Objekte in Abhängigkeit von der Feldstärke und Feldrichtung bestimmt,
wobei ein Feldkonzentrator (F1, F2) zwischen der Feldrückstreueinheit (M) und dem zweiten Objekt und/oder zwischen der Feldgeneratoreinheit (SR) und dem ersten Objekt angeordnet ist und wobei
der Feldkonzentrator (F1, F2) einen ferromagnetischen Stoff mit einer Permeabilitätszahl *µ*_{R}>100, aufweist.

9. System nach Patentanspruch 8, wobei die Feldgeneratoreinheit sowie die Feldmesseinheit ein RFID-Lesegerät aufweist und die Feldrückstreueinheit (M) zumindest eine RFID-Marke, insbesondere vier oder fünf RFID-Marken, aufweist.

10. System nach einem der Patentansprüche 8 oder 9, wobei der Feldkonzentrator (F1, F2) flächig ausgebildet ist.

11. System nach einem der Patentansprüche 1 bis 10, wobei der Feldkonzentrator (F1, F2) ein Material mit hoher Dielektrizitätskonstante, insbesondere εᵣ>2 aufweist.

## Claims

1. System for determining the position of objects (10, 11) that are movable with respect to one another, comprising:
a field generator unit (12) for generating an electric and/or magnetic positioning field, said field generator unit being assigned to a first object (10);
a field measuring unit (13) for measuring the electric and/or magnetic positioning field, said field measuring unit being assigned to a second object (11) and ascertaining position-dependent field information, wherein the field information comprises a field strength and a field direction; and
a position determining unit for determining a relative position of the objects (10, 11) depending on the field strength and the field direction, wherein
a first field concentrator (F1) is arranged between the first object (10) and the field generator unit (12) and/or a second field concentrator (F2) is arranged between the second object (11) and the field measuring unit (13), and
wherein
the field concentrator (F1, F2) comprises a ferromagnetic substance having a relative permeability µ_{R} > 100.

2. System according to Patent Claim 1, wherein the field generator unit (12) generates the electric and/or magnetic positioning field by means of at least one transmitting coil (S) .

3. System according to Patent Claim 2, wherein the transmitting coil (S) furthermore generates a charging field for inductive charging.

4. System according to any of Patent Claims 1 to 3, wherein the positioning field (PF) comprises an alternating electromagnetic field having a frequency of between 10 kHz and 20 MHz.

5. System according to any of Patent Claims 1 to 4, wherein the field measuring unit (13) comprises at least one receiving coil (E1), in particular four or five receiving coils.

6. System according to any of Patent Claims 1 to 5, wherein the field concentrator (F1, F2) is embodied in a planar fashion.

7. System according to any of Patent Claims 1 to 6, wherein an energy recovery unit recovers electrical energy from the positioning field and supplies the field measuring unit (13) therewith.

8. System for determining the position of objects that are movable with respect to one another, comprising:
a field generator unit (SR) for generating an electric and/or magnetic field, which is assigned to a first object;
a field backscattering unit (M) for backscattering the generated field, said field backscattering unit being assigned to a second object;
a field measuring unit (SR, 16) for measuring the backscattered field and ascertaining position-dependent field information, wherein the field information comprises a field strength and a field direction; and
a position determining unit, which determines a relative position of the object depending on the field strength and the field direction, wherein
a field concentrator (F1, F2) is arranged between the field backscattering unit (M) and the second object and/or between the field generator unit (SR) and the first object, and wherein
the field concentrator (F1, F2) comprises a ferromagnetic substance having a relative permeability µ_{R} > 100.

9. System according to Patent Claim 8, wherein the field generator unit and also the field measuring unit comprise an RFID reader and the field backscattering unit (M) comprises at least one RFID tag, in particular four or five RFID tags.

10. System according to either of patent Claims 8 and 9, wherein the field concentrator (F1, F2) is embodied in a planar fashion.

11. System according to any of Patent Claims 1 to 10, wherein the field concentrator (F1, F2) comprises a material having high relative permittivity, in particular εᵣ > 2.

## Revendications

1. Système pour la détermination de position d'objets (10, 11) mobiles l'un par rapport à l'autre, avec :
une unité de générateur de champ (12) pour la production d'un champ de positionnement électrique et/ou magnétique,
laquelle est associée à un premier objet (10) ;
une unité de mesure de champ (13) pour la mesure du champ de positionnement électrique et/ou magnétique, laquelle est associée à un deuxième objet (11) et détermine une information de champ dépendante de la position, l'information de champ comprenant une intensité de champ et une direction de champ ; et
une unité de détermination de position pour la détermination d'une position relative des objets (10, 11) en fonction de l'intensité de champ et de la direction de champ,
dans lequel
un premier concentrateur de champ (F1) est disposé entre le premier objet (10) et l'unité de générateur de champ (12) et/ou un deuxième concentrateur de champ (F2) est disposé entre le deuxième objet (11) et l'unité de mesure de champ (13) et dans lequel
le concentrateur de champ (F1, F2) comprend une matière ferromagnétique avec un indice de perméabilité *µ*_{R} > 100.

2. Système selon la revendication 1, dans lequel l'unité de générateur de champ (12) produit le champ de positionnement électrique et/ou magnétique avec au moins une bobine d'émission (S).

3. Système selon la revendication 2, dans lequel la bobine d'émission (S) produit en outre un champ de charge pour la charge inductive.

4. Système selon l'une des revendications 1 à 3, dans lequel le champ de positionnement (PF) comprend un champ alternatif électromagnétique avec une fréquence comprise entre 10 kHz et 20 MHz.

5. Système selon l'une des revendications 1 à 4, dans lequel l'unité de mesure de champ (13) comprend au moins une bobine de réception (E1), en particulier quatre ou cinq bobines de réception.

6. Système selon l'une des revendications 1 à 5, dans lequel le concentrateur de champ (F1, F2) est de forme plate.

7. Système selon l'une des revendications 1 à 6, dans lequel une unité de récupération d'énergie récupère une énergie électrique à partir du champ de positionnement et alimente avec celle-ci l'unité de mesure de champ (13).

8. Système pour la détermination de position d'objets mobiles l'un par rapport à l'autre, avec :
une unité de générateur de champ (SR) pour la production d'un champ électrique et/ou magnétique, lequel est associé à un premier objet ;
une unité de rétrodiffusion de champ (M) pour la rétrodiffusion du champ produit, laquelle est associée à un deuxième objet ;
une unité de mesure de champ (SR, 16) pour la mesure du champ rétrodiffusé et la détermination d'une information de champ dépendante de la position, l'information de champ comprenant une intensité de champ et une direction de champ ; et
une unité de détermination de position, laquelle détermine une position relative des objets en fonction de l'intensité de champ et de la direction de champ,
dans lequel
un concentrateur de champ (F1, F2) est disposé entre l'unité de rétrodiffusion de champ (M) et le deuxième objet et/ou entre l'unité de générateur de champ (SR) et le premier objet et dans lequel
le concentrateur de champ (F1, F2) comprend une matière ferromagnétique avec un indice de perméabilité *µ*_{R} > 100.

9. Système selon la revendication 8, dans lequel l'unité de générateur de champ ainsi que l'unité de mesure de champ comprennent un appareil de lecture RFID et l'unité de rétrodiffusion de champ (M) comprend au moins une marque RFID, en particulier quatre ou cinq marques RFID.

10. Système selon l'une des revendications 8 ou 9, dans lequel le concentrateur de champ (F1, F2) est de forme plate.

11. Système selon l'une des revendications 1 à 10, dans lequel le concentrateur de champ (F1, F2) comprend un matériau avec une constante diélectrique élevée, en particulier ∈ᵣ > 2.
